# EUROPÄISCHE PATENTSCHRIFT

(11) **EP 1 002 976 B1**
(45) Veröffentlichungstag und Bekanntmachung des Hinweises auf die Patenterteilung: **23.04.2003**
(21) Anmeldenummer: 99122283.7
(22) Anmeldetag: 09.11.1999
(51) Int. Cl.: F16K 31/60

(54) **Drehgriffanordnung**
Rotary handle device
Dispoitif de poignée rotative

(30) Priorität: 18.11.1998 DE 19853255
(43) Veröffentlichungstag der Anmeldung: 24.05.2000
(73) Patentinhaber: Friedrich Grohe AG & Co. KG, 58675 Hemer (DE)
(72) Erfinder: Humpert, Jürgen, 58675 Hemer (DE); Heimann, Bruno, 58730 Fröndenberg (DE); Philipps-Liebich, Hartwig, 58675 Hemer (DE)

(56) Entgegenhaltungen:
- DE-A- 19 542 747
- GB-A- 1 498 620
- US-A- 4 423 752

## Beschreibung

Die Erfindung betrifft ein Ventil, insbesondere sanitäres Ventil, mit einer Drehgriffanordnung, wobei
- ein Drehgriff mit einem Aufnahmebereich an einer drehschieberartigen Ventilspindel mit einem entsprechenden Aufnahmebereich in verschiedenen Drehstellungen befestigbar ist,
- die drehbare Ventilspindel mit einer vorstehenden Anschlagnase versehen ist, die mit einem festen Anschlag am Ventilgehäuse in Eingriff steht,
- am Drehgriff eine ebenfalls vorstehende Anschlagnase ausgebildet ist, die auch mit dem festen Anschlag in Eingriff steht.

Ein derartiges Ventil mit einer Drehgriffanordnung ist aus der deutschen Offenlegungsschrift DE 195 42 747 A1 bekannt. Hierbei ist die Ventilspindel axial in der Stecklage im Ventilgehäuse einerseits durch einen Sprengring und andererseits durch einen, an der Ventilspindel ausgebildeten vorkragenden Ringteil axial gesichert. Diese Anordnung ist relativ aufwendig und kostenträchtig. Darüber hinaus ist auch die Verbindung von Ventilspindel und Drehgriff über die vorgeschlagenen konischen Mantelflächen relativ aufwendig.

Der Erfindung liegt die Aufgabe zugrunde, das im Oberbegriff des Anspruchs 1 angegebene Ventil zu verbessern.

Diese Aufgabe wird bei einem gattungsgemäßen Ventil dadurch gelöst, daß der feste Anschlag als ein in eine im Ventilgehäuse ausgebildete Aufnahmebohrung für die Ventilspindel radial hineinragender Stift ausgebildet ist, wobei der Stift in der Stecklage in einen Ringbereich zwischen einer Schulter an der Ventilspindel und einer Stirnseite des Drehgriffs einfaßt und die Ventilspindel auch axial sichert.
Weitere Ausgestaltungen der Erfindung sind in den Ansprüchen 2 bis 10 angegeben.

Die mit der Erfindung erzielbaren Vorteile bestehen insbesondere darin, daß die axiale Fixierung der Ventilspindel in der Stecklage und die Anschlagausbildung für die Drehbegrenzung mit äußerst einfachen Mitteln realisiert werden kann.
In weiterer Ausgestaltung ermöglicht die Riefenverzahnung auf der Ventilspindel eine äußerst einfache und hinreichend feingestufte Einstellung des Drehwinkels für die Ventilspindel. Zweckmäßig wird hierbei der Drehgriff zweiteilig aus einer Hülse und einem Handgriffstück gebildet, wobei die Hülse mit einer Innenriefenverzahnung für die Aufnahme der Ventilspindel und einer Außenriefenverzahnung für die drehfeste Aufnahme des Handgriffstücks versehen ist. Auch können die Hülse und das Handgriffstück als separate Teile axial hintereinander auf der Riefenverzahnung der Ventilspindel angeordnet werden.
Der erfindungsgemäße Stift als Anschlagausbildung kann unlösbar, z. B. als Kerbstift, im Ventilgehäuse angeordnet sein, wobei dann bei der Zusammenmontage die Ventilspindel auf der vom Drehgriff abgekehrten Seite in die Aufnahmebohrung des Ventilgehäuses einzustecken ist und erst danach kann, wenn die Ventilspindel mit ihrer Schulter am Stift anliegt, der Drehgriff auf den aus der Aufnahmebohrung vorstehenden Zapfen mit der Riefenverzahnung aufgesteckt werden. Vorteilhaft kann der Stift jedoch an einer Schraube ausgebildet werden. Hierdurch wird es ermöglicht, daß die Ventilspindel beliebig in die Aufnahmebohrung eingebracht werden kann, da erst mit dem Eindrehen der stifttragenden Schraube der Festanschlag zur Drehwinkelbegrenzung und zur Axialsicherung hergestellt wird.
Besonders geeignet ist die erfindungsgemäße Drehgriffanordnung für Mischventile, insbesondere zur Erzeugung von Mischwasser. Andererseits kann die Drehgriffanordnung auch für Mengenregulierventile verwendet werden.

Ein Ausführungsbeispiel der Erfindung ist in der Zeichnung dargestellt und wird im folgenden näher beschrieben. Es zeigt
- Fig. 1: eine Wasserauslaufarmatur in Perspektivansicht mit herausgezogener Ventilspindel und Drehgriff;
- Fig. 2: einen Teil der in Fig. 1 gezeigten Wasserauslaufarmatur in der Schnittebene II mit einmontierter Ventilspindel in vergrößerter Darstellung;
- Fig. 3: einen Teil der in Fig. 2 dargestellten Wasserauslaufarmatur in der Schnittebene III in vergrößerter Darstellung, wobei ein maximal möglicher Drehbereich vorgesehen ist;
- Fig. 4: die in Fig. 3 gezeigte Wasserauslaufarmatur mit einem reduzierten Drehbereich.

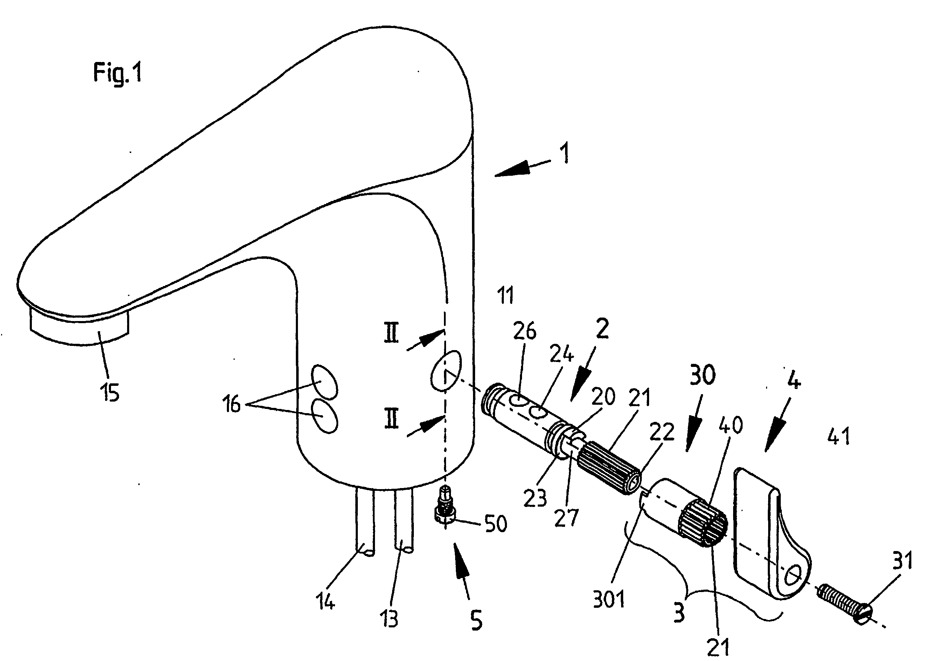

Die in Fig. 1 gezeigte Wasserauslaufarmatur ist nur in schematischer Weise dargestellt, wobei ein Ventilgehäuse 1 vorgesehen ist, welches auf einem in der Zeichnung nicht dargestellten Waschtisch in bekannter Weise befestigbar ist. Am unteren Bereich des Ventilgehäuses 1 ist eine Kaltwasserleitung 13 und eine Warmwasserleitung 14 angeschlossen. In einer Aufnahmebohrung 11 des Ventilgehäuses 1 ist eine drehschieberartige Ventilspindel 2 gedichtet einsteckbar. In der Ventilspindel 2 ist eine Durchgangsbohrung 24 für die Kaltwasserdrosselung und eine Bohrung 26 für die Warmwasserdrosselung ausgebildet. In der Stecklage in der Aufnahmebohrung 11 korrespondieren die Bohrungen 24,26 mit den mit der Kaltwasserleitung 13 und der Warmwasserleitung 14 verbundenen Kanälen (in der Zeichnung nicht dargestellt) im Ventilgehäuse 1. Die Bohrungen 24,26 sind hierbei in der Ventilspindel 2 so angeordnet, daß bei einer Drehbewegung der Ventilspindel 2 in einer Drehrichtung der Durchtrittsquerschnitt durch die Bohrung 24, um einen bestimmten Betrag gedrosselt wird, wobei gleichzeitig der Durchtrittsquerschnitt durch die Bohrung 26 um den entsprechenden Betrag vergrößert wird. Bei einer Drehbewegung in der anderen Drehrichtung erfolgt in umgekehrter Weise eine Änderung der Durchtrittsquerschnitte. Die Bohrungen 24,26 sind dabei so ausgelegt und dimensioniert, daß an einem Wasserauslaßmundstück 15 in Abhängigkeit von der Drehstellung der Ventilspindel 2 Kaltwasser, gemischtes Wasser, wobei mit zunehmendem Drehwinkel die Temperatur des Mischwassers entsprechend erhöht wird, oder Heißwasser abgegeben wird. Anstatt der Bohrungen 24,26 können auch andere Steuereinrichtungen, beispielsweise Ausnehmungen in der Mantelfläche, an der Ventilspindel vorgesehen werden.
Der Wasserauslaß wird hierbei von einem Annäherungssensor 16 über ein in der Zeichnung nicht dargestelltes Magnetventil gesteuert. Gelangt ein Gegenstand in den Erfassungsbereich des Annäherungssensor 16, so wird das Magnetventil geöffnet und der Wasseraustritt freigegeben. Entfernt sich der Gegenstand wieder aus dem Erfassungsbereich des Annäherungssensors 16, so wird der Wasserausfluß durch das Magnetventil abgesperrt.

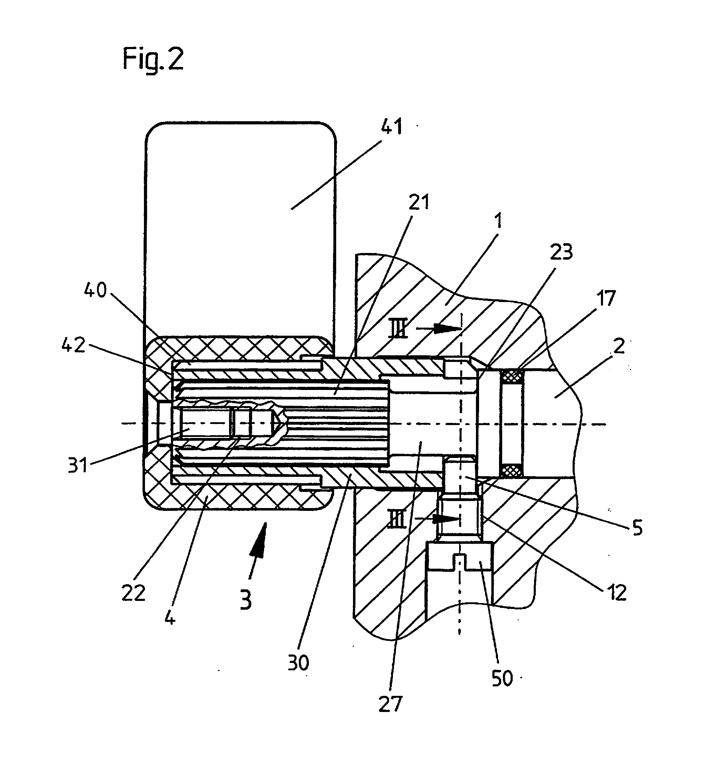

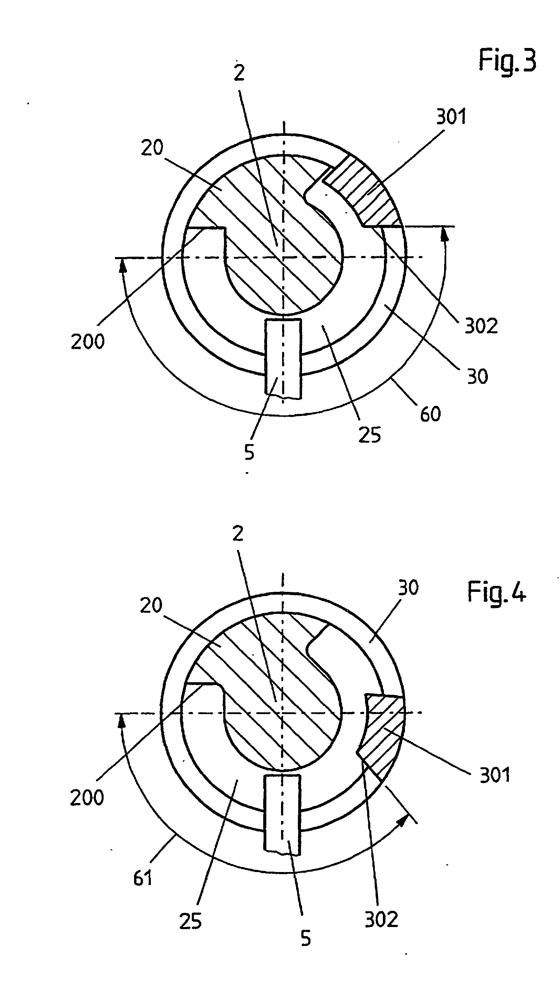

Die Ventilspindel 2 ist, wie es insbesondere aus Fig. 2 zu entnehmen ist, in der Stecklage in der Aufnahmebohrung 11 mit O-Ringen 17 zur Wandung der Aufnahmebohrung 11 abgedichtet. Am vorstehenden Endbereich der Ventilspindel 2 ist eine axial vorstehende Anschlagnase 20 im Bereich einer Schulter 23 angeformt. An einem im Durchmesser verringerten Ansatz 27 ist eine auf dem Außenmantel aufgebrachte feinstufige Riefenverzahnung 21 vorgesehen. Durch eine Gewindebohrung 12 ist ein Stift 5 radial in die Aufnahmebohrung 11 hineinragend angeordnet. Zur Halterung in der Stecklage ist der Stift 5 an einer Schraube 50 ausgebildet. Alternativ kann der Stift aber auch, beispielsweise als Kerbstift, im Gehäuse angeordnet sein.
Der Stift 5 liegt in seiner Stecklage seitlich an einer Schulter 23 der Ventilspindel 2 an, so daß die Ventilspindel 2 gegen ein Herausziehen aus der Aufnahmebohrung 11 gesichert wird. Andererseits ist der Drehwinkel der Ventilspindel 2 durch die Anschlagnase 20 von dem Stift 5 begrenzt, wie es insbesondere aus Fig. 3 und 4 zu entnehmen ist.
Auf die Riefenverzahnung 21 des Ansatzes 27 ist ein Drehgriff 3 mit einer Hülse 30 mit einer im Innenmantel ausgebildeten entsprechenden Riefenverzahnung 21 feingestuft in verschiedenen Drehstellungen aufsteckbar. An der vorstehenden Stirnseite der Hülse 30 ist eine Anschlagnase 301 ausgebildet. In der Stecklage liegt die vorstehende Stirnseite der Hülse 30 ebenfalls an dem Stift 5 an, so daß die Ventilspindel 2 mit dem Drehgriff 3 in einen Ringbereich 25 gedreht werden kann, aber axial festliegend geführt ist.
Die Hülse 30 ist hierbei am Außenmantel mit einer weiteren Riefenverzahnung 40 versehen, auf die ein Handgriffstück 4 mit einer Sackbohrung 42, in der in der Mantelfläche eine entsprechende Riefenverzahnung 40 ausgebildet ist, in verschiedenen Drehstellungen aufsteckbar ist. In der Stecklage kann die Hülse 30 zusammen mit dem Handgriffstück 4 von einer in eine Gewindebohrung 22 in der Stirnseite der Ventilspindel 2 einschraubbaren Schraube 31 gesichert werden. An dem Handgriffstück 4 ist ein Arm 41 zur leichten Drehbewegung der Ventilspindel 2 angeformt. Alternativ kann auch der Drehgriff mit der Hülse einstückig ausgebildet sein. Auch kann der einstückige Drehgriff so ausgebildet sein, daß ein zusätzlicher Hebelarm in verschiedenen Drehstellungen an ihm mittels Verzahnung befestigbar ist. Schließlich können auch die Hülse und das Handgriffstück hintereinander nur auf der Riefenverzahnung der Ventilspindel angeordnet sein.

Die Montage und Einstellung der Ventilspindel kann in folgender Weise durchgeführt werden:
Zunächst wird die Ventilspindel 2 mit den O-Ringen 17 komplettiert und axial in die Aufnahmebohrung 11 eingesteckt. Sodann kann die Schraube 50 mit dem Stift 5 in die Gewindebohrung 12 eingedreht werden, bis der Stift 5 radial in die Aufnahmebohrung 11 vorsteht und die Ventilspindel 12 mit der Schulter 23 an dem Stift 5 anliegt. Hiernach ist die Ventilspindel 2 soweit zu verdrehen, bis ein Kaltwasseranschlag 200 der Anschlagnase 20 an dem Stift 5 anliegt. Sodann wird der Drehgriff 3 bzw. die Hülse 30 sowie das Handgriffstück 4 in der Kaltwasserdrehstellung auf die Riefenverzahnung 21 der Ventilspindel 2 aufgesteckt und mit der Schraube 31 gesichert. In dieser Steckposition ist der maximal mögliche Drehwinkel gewählt, wie es insbesondere in Fig. 3 dargestellt ist. Der maximale Drehwinkel 60 erstreckt sich vom Kaltwasseranschlag 200 bis zu einem Heißwasseranschlag 302 an der Anschlagnase 301 der Hülse 30.

Soll die maximal einstellbare Wassertemperatur begrenzt werden, so wird mit dem Drehgriff 3 zunächst die gewünschte maximale Wassertemperatur durch Drehung der Ventilspindel 2 eingestellt. Sodann wird die Schraube 31 gelöst und der Drehgriff 3 bzw. die Hülse 30 sowie das Handgriff stück 4 von der Riefenverzahnung 21 der Ventilspindel 2 abgezogen. Die Ventilspindel 2 verharrt hierbei in ihrer Drehstellung. Der Drehgriff 3 bzw. die Hülse 30 wird hiernach in einer derartigen Drehstellung auf die Ventilspindel 2 gesteckt, daß die Anschlagnase 301 der Hülse 30 mit ihrem Warmwasseranschlag 302 an dem Stift 5 zur Anlage gelangt. Damit ist ein reduzierter Drehwinkel 61 für den Drehgriff 3 eingestellt, wie es aus Fig. 4 ersichtlich ist. Der Stift 5 gleitet hierbei in einem Ringbereich 25 der durch die feingestufte Riefenverzahnung 21 im Drehwinkel einstellbar ist.

Bei dem Ausführungsbeispiel ist die Drehgriffanordnung an einem Mischventil verwirklicht. Selbstverständlich kann die Drehgriffanordnung auch an einem Mengenregulierventil eingesetzt werden, wobei dann durch die einstellbare Drehwinkelbegrenzung die maximale Durchflußmenge einstellbar ist.

## Patentansprüche

1. Ventil, insbesondere sanitäres Wasserventil, mit einer Drehgriffanordnung, wobei
- ein Drehgriff (3) mit einem Aufnahmebereich an einer drehschieberartigen Ventilspindel (2) mit einem entsprechenden Aufnahmebereich in verschiedenen Drehstellungen befestigbar ist,
- die drehbare Ventilspindel (2) mit einer vorstehenden Anschlagnase (20) versehen ist, die mit einem festen Anschlag am Ventilgehäuse (1) in Eingriff steht,
- am Drehgriff (3) eine ebenfalls vorstehende Anschlagnase (301) ausgebildet ist, die auch mit dem festen Anschlag in Eingriff steht,
**dadurch gekennzeichnet, daß** der feste Anschlag als ein, in einer im Ventilgehäuse (1) ausgebildeten Aufnahmebohrung (11) für die Ventilspindel (2) radial hineinragender Stift (5) ausgebildet ist, wobei der Stift (5) in der Stecklage in einem Ringbereich (25) zwischen einer Schulter (23) an der Ventilspindel (2) und an einer Stirnseite des Drehgriffs (3) einfaßt und die Ventilspindel (2) auch axial sichert.

2. Ventil nach Anspruch 1, **dadurch gekennzeichnet, daß** der Drehgriff (3) eine Hülse (30) aufweist, an der an der inneren Stirnseite die Anschlagnase (301) ausgebildet ist.

3. Ventil nach Anspruch 1 oder 2, **dadurch gekennzeichnet, daß** der Drehgriff (3) mittels Riefenverzahnung (21) auf der Ventilspindel (2) in verschiedenen feingestuften Drehstellungen befestigbar ist.

4. Ventil nach wenigstens einem der vorhergehenden Ansprüche, **dadurch gekennzeichnet, daß** der Drehgriff (3) einen Hebel aufweist, welcher mittels Verzahnung auf den Drehgriff (3) in verschiedenen Drehstellungen drehfest anordbar ist.

5. Ventil nach wenigstens einem der vorhergehenden Ansprüche, **dadurch gekennzeichnet, daß** der Drehgriff (3) aus einer Hülse (30) und einem Handgriffstück (4) gebildet ist, wobei die Hülse (30) axial einerseits von einer Sackbohrung (42) im Handgriffstück (4) und andererseits von der Schulter (23) an der Ventilspindel (2) gehalten ist.

6. Ventil nach wenigstens einem der vorhergehenden Ansprüche, **dadurch gekennzeichnet, daß** der Drehgriff (3) oder die Hülse (30) mit dem Handgriffstück (4) von einer Schraube (31), die in eine stirnseitige Gewindebohrung (22) der Ventilspindel (2) eindrehbar ist, in der Stecklage gehalten ist oder sind.

7. Ventil nach wenigstens einem der vorhergehenden Ansprüche, **dadurch gekennzeichnet, daß** der Stift (5) an einer Schraube (50) ausgebildet ist, die in eine Gewindebohrung (12) im Gehäuse (1) eindrehbar ist.

8. Ventil nach wenigstens einem der vorhergehenden Ansprüche, **dadurch gekennzeichnet, daß** das Handgriffstück (4) mit einem radial vorstehenden Arm (41) versehen ist.

9. Ventil nach wenigstens einem der vorhergehenden Ansprüche, **dadurch gekennzeichnet, daß** die Hülse (30) und das Handgriffstück (4) hintereinander auf der Riefenverzahnung (21) der Ventilspindel (2) angeordnet sind.

10. Ventil nach wenigstens einem der vorhergehenden Ansprüche, **dadurch gekennzeichnet, daß** die in dem Drehgriff (3) ausgebildete Anschlagnase (301) den Heißwasseranschlag (302) und die an der Ventilspindel (2) ausgebildete Anschlagnase (20) den Kaltwasseranschlag (200) eines Wassermischventils bildet.

## Claims

1. Valve, especially a sanitary water valve, having a rotatable control arrangement, wherein
- a rotatable control (3) having a seating region is securable in different rotated positions on a valve spindle (2) of rotary valve form having a complementary seating region,
- the rotatable valve spindle (2) is provided with a protruding stop projection (20) which is in engagement with a fixed stop member on the valve housing (1),
- a likewise protruding stop projection (301) that is also in engagement with the fixed stop member is formed on the rotatable control (3),
**characterised in that** the fixed stop member is in the form of a pin (5) extending radially into a receiving bore (11) for the valve spindle (2), the receiving bore being formed in the valve housing (1), the pin (5) in the inserted position being engaged in an annular region (25) between a shoulder (23) on the valve spindle (2) and on one end face of the rotatable control (3) and also axially securing the valve spindle (2).

2. Valve according to claim 1, **characterised in that** the rotatable control (3) comprises a sleeve (30) on which, on the inner end face, the stop projection (301) is formed.

3. Valve according to claim 1 or 2, **characterised in that** by means of a splining (21) on the valve spindle (2) the rotatable control (3) is securable in different finely stepped rotated positions.

4. Valve according to at least one of the preceding claims, **characterised in that** the rotatable control (3) comprises a lever that by means of splining is non-rotatably arrangeable in different rotated positions on the rotatable control (3).

5. Valve according to at least one of the preceding claims, **characterised in that** the rotatable control (3) is formed from a sleeve (30) and a hand grip part (4), the sleeve (30) being axially held at one end by a blind bore (42) in the hand grip part (4) and at the other end by the shoulder (23) on the valve spindle (2).

6. Valve according to at least one of the preceding claims, **characterised in that** the rotatable control (3) or the sleeve (30) is or are held in the assembled position with the hand grip part (4) by a screw (31), which is arranged to be screwed into a threaded bore (22) in the end face of the valve spindle (2).

7. Valve according to at least one of the preceding claims, **characterised in that** the pin (5) is formed on a screw (50), which is arranged to be screwed into a threaded bore (12) in the housing (1).

8. Valve according to at least one of the preceding claims, **characterised in that** the hand grip part (4) is provided with a radially projecting arm (41).

9. Valve according to at least one of the preceding claims, **characterised in that** the sleeve (30) and the hand grip part (4) are arranged one behind the other on the splining (21) of the valve spindle (2).

10. Valve according to at least one of the preceding claims, **characterised in that** the stop projection (301) formed in the rotatable control (3) forms the hot water stop member (302) and the stop projection (20) formed on the valve spindle (2) forms the cold water stop member (200) of a water-mixing valve.

## Revendications

1. Robinet, en particulier robinet d'eau sanitaire, avec un système à poignée tournante dans lequel :
- une poignée tournante (3) avec une zone d'accueil peut-être fixée en différentes positions de rotation sur une tige de robinet (2) du genre tiroir rotatif présentant une zone d'accueil correspondante,
- la tige rotative de robinet (2) est équipée d'une dent de butée (20) en saillie, qui est en prise avec une butée fixe de boîtier de robinet (1), et
- sur la poignée tournante (3) se trouve également une dent de butée (301) en saillie, qui est également en prise avec la butée fixe.
**caractérisé en ce que**
la butée fixe est constituée par une cheville (5) pénétrant radialement dans un alésage (11) prévu dans le boîtier de robinet (11) pour accueillir la tige de robinet (2), cette cheville (5), en position enfichée, pénétrant dans une zone annulaire (25) située entre un épaulement (23) sur la tige de robinet (2) et sur une face frontale de la poignée (3), et assurant ainsi la tige de robinet (2) même en direction axiale.

2. Robinet selon la revendication 1,
**caractérisé en ce que**
la poignée tournante (3) présente une douille (30) sur laquelle est réalisée la dent de butée (301) située sur la face frontale interne.

3. Robinet selon la revendication 1 ou 2,
**caractérisé en ce que**
la poignée tournante (3) peut être fixée au moyen d'une denture cannelée (21) sur la tige de robinet (2), dans diverses positions de rotation finement étagées.

4. Robinet selon au moins une des revendications précédentes,
**caractérisé en ce que**
la poignée tournante (3) présente un levier qui peut être monté, avec solidarité en rotation, par l'intermédiaire de la denture, dans diverses positions sur la poignée tournante (3).

5. Robinet selon au moins une des revendications précédentes,
**caractérisé en ce que**
la poignée tournante (3) est constituée par une douille (30) et une pièce de manoeuvre (4), la douille (30) étant maintenue axialement d'un côté par un alésage borgne (42) pratiqué dans la pièce de manoeuvre (4) et de l'autre côté par l'épaulement (23) sur la tige de robinet (2).

6. Robinet selon au moins une des revendications précédentes,
**caractérisé en ce que**
la poignée tournante (3) ou la douille (30) et la pièce de manoeuvre (4) est (ou sont) maintenue(s) dans la position emmanchée par une vis (31) qui peut être montée dans un alésage fileté (22) pratiqué dans la face frontale de la tige de robinet (2).

7. Robinet selon au moins une des revendications précédentes,
**caractérisé en ce que**
la cheville (5) est réalisée sur une vis (50) qui peut être montée dans un alésage fileté (12) au boîtier (1).

8. Robinet selon au moins une des revendications précédentes,
**caractérisé en ce que**
la pièce de manoeuvre (4) est équipée d'un bras (41) faisant saillie radialement.

9. Robinet selon au moins une des revendications précédentes,
**caractérisé en ce que**
la douille (30) et la pièce de manoeuvre (4) sont montées l'une derrière l'autre sur la denture cannelée (21) de la tige de robinet (2).

10. Robinet selon au moins une des revendications précédentes,
**caractérisé en ce que**
la dent de butée (301) réalisée sur la poignée tournante (3) constitue la butée d'eau chaude (302) tandis que la dent de butée (20) réalisée sur la tige de robinet (2) constitue la butée d'eau froide (200).
